# EUROPÄISCHE PATENTSCHRIFT

(11) **EP 1 055 877 B1**
(45) Veröffentlichungstag und Bekanntmachung des Hinweises auf die Patenterteilung: **03.09.2003**
(21) Anmeldenummer: 99810457.4
(22) Anmeldetag: 26.05.1999
(51) Int. Cl.: F23D 14/22, C09C 1/50

(54) **Brenner zum Erzeugen von Russ**
Burner for producing carbon black
Brûleur pour la production de noir de carbone

(43) Veröffentlichungstag der Anmeldung: 29.11.2000
(73) Patentinhaber: Jing, Lianpeng, 3052 Zollikofen (CH)
(72) Erfinder: Jing, Lianpeng, 3052 Zollikofen (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) Entgegenhaltungen:
- DE-A- 2 842 977
- US-A- 4 751 069
- 2nd ETH Workshop: "Nanoparticle Measurement" ETH Hönggerberg Zürich - 7th August 1998 "Generation of combustion soot particles for calibration purposes" Lianpeng Jing

## Beschreibung

### Technisches Gebiet

Die Erfindung betrifft einen Brenner zum Erzeugen von Russ nach dem Oberbegriff des Anspruchs 1, ein Verfahren zum Erzeugen von Russ nach Anspruch 8 und ein Verfahren zum Eichen von Russpartikel-Messgeräten nach Anspruch 12.

### Stand der Technik

Für Untersuchungen der Eigenschaften von Russpartikeln sowie die Eichung und/oder die Kalibration von Russpartikel-Messgeräten wurden bisher häufig Dieselmotoren als Russquellen bzw. Russgeneratoren verwendet. Dieselmotoren weisen als Russquelle für Laboruntersuchungen von Russpartikeln mehrere Nachteile auf. So ist z.B. der Platzbedarf für einen Dieselmotor relativ gross und der Betrieb eines Dieselmotors ist mit Lärm- und Abgasemissionen verbunden. Als Russquelle zum Eichen und/oder Kalibrieren von Russpartikel-Messgeräten weisen Dieselmotoren Nachteile auf, weil diverse Eigenschaften der erzeugten Russpartikel, wie z.B. die Grössenverteilung, die Anzahlkonzentration und/oder die chemische Zusammensetzung nur schlecht oder überhaupt nicht kontrollierbar sind. Zudem sind charakteristische Eigenschaften der mittels Dieselmotoren erzeugten Russpartikel über die gesamte Lebensdauer eines Dieselmotors nicht stabil. Deshalb ist mittels Dieselmotoren erzeugter Russ nur schlecht reproduzierbar.

Aus der Druckschrift EP-A2-353 746 ist eine Vorrichtung zum Erzeugen eines Feststoffaerosols bekannt, welche Kohlenstoffaerosole durch Funkenentladung über teilchenabgebende Graphitelektroden erzeugt. Diese Vorrichtung ist zwar in Bezug auf den Platzbedarf und die Emissionen für den Laborbetrieb wesentlich besser geeignet als ein Dieselmotor. Die erzeugten Kohlenstoffaerosole weichen jedoch hinsichtlich ihrer chemischen und physikalischen Eigenschaften beträchtlich von Verbrennungsrusspartikeln ab und sind somit für letztere in den meisten Fällen nicht repräsentativ.

In der Patentschrift US-A-4 751 069 wird zur Erzeugung von Russ mit einer grossen Oberfläche und geringer Porosität ein Verfahren beschrieben, bei welchem kohlenstoffhaltiges Material bei einer hohen Temperatur gecrackt wird, wobei die Reaktion der Russerzeugung durch direkten Kontakt der Reaktionsprodukte mit einem Hilfsbrennstoff zumindest teilweise gelöscht wird.

In der vom Erfinder des Gegenstandes der vorliegenden Patentanmeldung geschriebenen Publikation "Generation of Combustion Soot Particles for Calibration Purposes", die im Rahmen der Veranstaltung "2^{nd} ETH Workshop on Nanoparticle Measurement, ETH Hönggerberg Zürich, Switzerland, 7. August 1998" veröffentlicht wurde, wird ein Brenner mit einem offenen Brennraum beschrieben, zu welchem Brennstoffgas und Oxidationsgas derart zugeführt werden, dass im Brennraum eine Parallel-Diffusionsflamme (englisch "co-flow diffusion flame") gebildet wird. Die in der Flamme gebildeten Russpartikel werden über eine in der Flamme mündenden Russwegführleitung weggeführt. Der mit diesem Brenner erzeugte Russ kommt zwar hinsichtlich seiner chemischen und physikalischen Eigenschaften dem Verbrennungsruss aus Dieselmotoren und Feuerungen recht nahe. Der Brenner reagiert jedoch sehr empfindlich auf Veränderungen der Strömungsverhältnisse in der Russwegführleitung. Bereits geringfügige Änderungen der geometrischen Form eines in der Russwegführleitung angeordneten Teils einer Messvorrichtung (z.B. eines Messfühlers) haben Rückwirkungen auf die Flamme und die Eigenschaften der erzeugten Russpartikel. Dies verursacht Probleme bei der Reproduzierbarkeit der mit dem Brenner erzeugten Russpartikel. Des weiteren neigt die in der Flamme angeordnete Mündung der Russwegführleitung zu einer starken Russablagerung, was zu Problemen hinsichtlich der zeitlichen Stabilität der Eigenschaften der mit dem Brenner erzeugten Russpartikel führt.

### Darstellung der Erfindung

Aufgabe der Erfindung ist die Angabe eines Brenners zum stabilen und reproduzierbaren Erzeugen von Russ derart, dass die erzeugten Russpartikel wohldefinierte chemische und physikalische Eigenschaften aufweisen.

Die Lösung der Aufgabe ist durch die Merkmale des Anspruchs 1 definiert. Gemäss der Erfindung weist ein Brenner zum Erzeugen von Russ einen Brennraum auf, zu welchem Brennstoffgas und Oxidationsgas derart zuführbar sind, dass im Brennraum eine Russpartikel erzeugende Diffusionsflamme gebildet wird. Der Brenner ist weiter mit einer Russwegführleitung versehen. Im Brennraum gebildeter Russ ist durch eine aus dem Brennraum in die Russwegführleitung mündende Einmündung hindurch über die Russwegführleitung wegführbar. Die Russwegführleitung ist mit einer weiteren Einmündung versehen, durch welche hindurch Löschgas in die Russwegführleitung zuführbar ist.

Die aus dem Brennraum in die Russwegführleitung austretende Stoffströmung, welche u.a. die in der Diffusionsflamme gebildeten Russpartikel, die Verbrennungsabgase sowie allfällig vorhandene unverbrannte Brennstoff- und/oder Oxidationsgase enthält, kann in der Russwegführleitung mit einem Löschgas vermischt und dadurch gelöscht werden, so dass Verbrennungsprozesse in dieser Stoffströmung sofort gestoppt werden. Das im Vergleich zu der Strömung aus dem Brennraum kühlere Löschgas bewirkt weiter eine Abkühlung der Stoffströmung aus dem Brennraum sowie eine Verdünnung dieser Stoffströmung. Durch das Stoppen der Verbrennungsprozesse, das Abkühlen der Russpartikel und die Verdünnung der Stoffströmung aus dem Brennraum werden weitere unkontrollierte Koagulationen und/oder andere Reaktionen der in der Flamme erzeugten Russpartikel weitgehend unterbunden. Dadurch finden die Verbrennung und die Russbildung auf einem Strömungspfad statt, dessen Länge vom Beginn der Flamme im Brennraum bis zur Löschzone in der Russwegführleitung klar definiert ist. Über die Strömungsgeschwindigkeit ist dadurch auch die Russbildungszeit definiert, was eine Voraussetzung zur Erzeugung von Russpartikeln mit wohldefinierten chemischen und physikalischen Eigenschaften ist. Des weiteren werden durch das Löschen der Stoffströmung aus dem Brennraum die Russablagerungen im Brenner vermindert und somit die zeitliche Stabilität der Eigenschaften der mittels des erfindungsgemässen Brenners erzeugten Russpartikel verbessert. Zudem werden, indem der aus dem Brennraum in die Russwegführleitung austretenden Stoffströmung eine vergleichsweise starke Löschgasströmung beigemischt wird, die Rückwirkungen von Änderungen der Strömungsverhältnisse stromabwärts der Brennraum-Einmündung auf die Strömungsverhältnisse im Brennraum vermindert. Dies führt zu einer Verbesserung der Reproduzierbarkeit der mit dem Brenner erzeugten Russpartikel.

Bei einem Brenner gemäss einer bevorzugten Ausführungsart der Erfindung ist die Löschgas-Einmündung in Bezug auf die Strömungsrichtung in der Russwegführleitung vor der Brennraum-Einmündung an der Russwegführleitung angeordnet, wobei die Brennraum-Einmündung vorzugsweise derart an der Russwegführleitung angeordnet ist, dass die Strömung aus dem Brennraum im wesentlichen rechtwinklig in die Löschgas-Strömung einmündet. Bei alternativen Ausführungsformen der Erfindung kann dass Löschgas auch nach der Brennraum-Einmündung in die Russwegführleitung eingeführt werden, oder die Löschgasströmung und die Brennraumströmung können unter einem von neunzig Grad abweichenden Winkel zusammengeführt werden.

Gemäss einem weiteren Aspekt der Erfindung weist ein Brenner zum Erzeugen von Russ einen Brennraum auf, zu welchem durch Zufuhrmündungen hindurch Brennstoffgas und Oxidationsgas derart zuführbar sind, dass im Brennraum eine Russpartikel erzeugende Diffusionsflamme gebildet wird, sowie eine Russwegführleitung mit wenigstens einer Einmündung aus dem Brennraum, durch welche hindurch im Brennraum gebildeter Russ wegführbar ist. Der Brennraum ist bis auf die Zufuhrmündungen für das Brennstoffgas und das Oxidationsgas sowie den in die Russwegführleitung mündenden Mündungen derart hermetisch abgeschlossen, dass sämtliche aus dem Brennraum ausströmenden Stoffe durch die Russwegführleitung hindurch weggeführt werden. Dadurch wird der Brenner in Bezug auf die Eigenschaften der erzeugten Russpartikel stabil gegenüber ändernden Umgebungseinflüssen. Dieser Aspekt der Erfindung erweist sich auch bei einem Brenner ohne Möglichkeit zu einer Löschgaszuführung als vorteilhaft. Vorzugsweise ist die Distanz zwischen den Zufuhrmündungen für das Brennstoffgas und das Oxidationsgas einerseits sowie den in die Russwegführleitung mündenden Mündungen andrerseits wahlweise einstellbar.

Gemäss einer weiteren bevorzugten Ausführungsart der Erfindung weist ein Brenner ein Aussenrohr für die Zufuhr des Oxidationsgases zum Brennraum auf, wobei koaxial zum Aussenrohr in dessen Innenraum ein Innenrohr für die Zufuhr des Brennstoffgases zum Brennraum derart angeordnet ist, dass im Brennraum eine Parallel-Diffusionsflamme gebildet werden kann.

Vorzugsweise ist ein erfindungsgemässer Brenner weiter mit Mitteln zum Verdünnen der Anzahlkonzentration der Russpartikel in der die Russpartikel enthaltenden Strömung stromabwärts des Brennraumes versehen. Dadurch wird z.B. zum Eichen und/oder Kalibrieren von Russpartikel-Messgeräten eine Anpassung der Anzahlkonzentration an den Messbereich der Messgeräte ermöglicht.

Weiter wird bevorzugt, dass ein erfindungsgemässer Brenner mit einer Mischvorrichtung versehen ist, welche stromaufwärts des Brennraumes eine Vermischung des Brennstoffgases mit einem Inertgas ermöglicht, wobei das Mischungsverhältnis wahlweise einstellbar ist. Dadurch können u.a. die Grössenverteilung, die Menge und/oder die Konzentration der erzeugten Russpartikel beeinflusst werden.

Bei einem erfindungsgemässen Verfahren zum Erzeugen von Russ werden Brennstoffgas und Oxidationsgas derart in einen Brennraum eines Brenners zugeführt, dass im Brennraum eine Russpartikel erzeugende Diffusionsflamme gebildet wird, wobei die aus dem Brennraum austretende russpartikelhaltige Strömung mit einer Strömung aus Löschgas vermischt wird, um Verbrennungsprozesse in der russpartikelhaltigen Strömung zu ersticken.

Vorteilhafterweise werden das Brennstoffgas und das Oxidationsgas derart in den Brennraum zugeführt, dass im Brennraum eine laminare Diffusionsflamme gebildet wird. Durch die Schaffung von Strömungsverhältnissen zur Bildung einer laminaren Diffusionsflamme im Brennraum wird es ermöglicht, die im Brennraum erzeugten Russpartikel derart durch den Brenner hindurch zu führen, dass Russablagerungen im Brenner weitgehend vermieden werden. In Kombination mit dem weiter oben erwähnten Aspekt einer Parallel-Diffusionsflamme kann im Brennraum eines erfindungsgemässen Brenners eine laminare Parallel-Diffusionsflamme gebildet werden.

Vorzugsweise wird als Löschgas ein Inertgas verwendet, das aus einer die Edelgase, Stickstoff und Kohlendioxid umfassende Gruppe ausgewählt ist.

Dem Löschgas kann vor der Vermischung mit der russpartikelhaltigen Strömung wenigstens ein zusätzliches Gas oder Aerosol beigemischt werden, um eine russpartikelhaltige Strömung zu erzeugen, welche russpartikelhaltigen Strömungen aus Verbrennungsmotoren und/oder Feuerungen möglichst ähnlich ist. Auf diese Art können mittels des erfindungsgemässen Verfahrens russbildende Reaktionen und entsprechende Strömungen simuliert werden, die den Abgasströmungen aus Verbrennungsmotoren und/oder Feuerungen sehr nahe kommen.

Ein Verfahren zum Eichen eines Russpartikel-Messgerätes zeichnet sich dadurch aus, dass zum Eichen des Russpartikel-Messgerätes diesem mittels eines erfindungsgemässen Brenners erzeugte Russpartikel zugeführt werden.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Aus der nachfolgenden Beschreibung, den Zeichnungen und der Gesamtheit der Patentansprüche ergeben sich weitere vorteilhafte Ausführungsformen und Merkmalskombinationen der Erfindung.

### Kurze Beschreibung der Zeichnungen

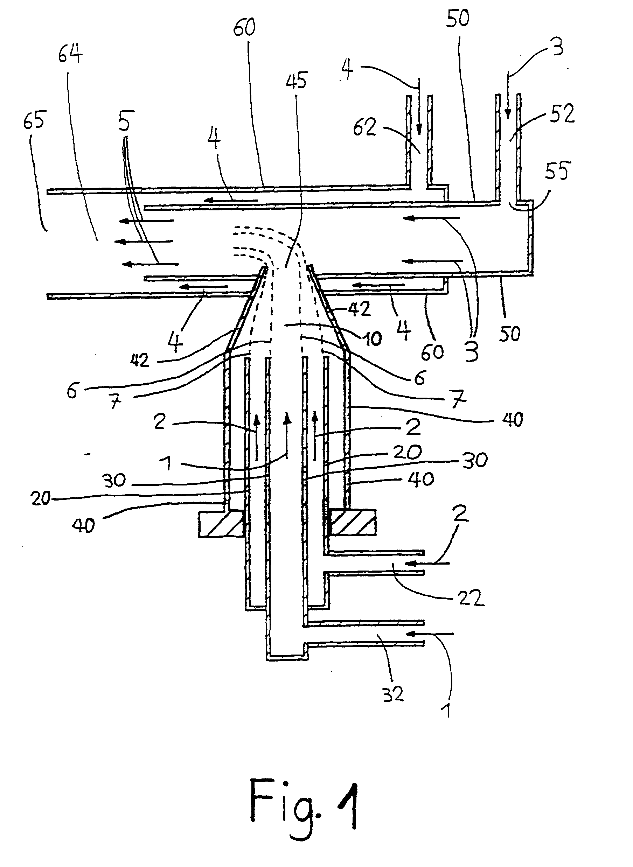

Die zur Erläuterung des Ausführungsbeispiels verwendete Zeichnung Fig. 1 zeigt in einer vereinfachten, schematischen geschnittenen Seitenansicht einen Brenner gemäss einer bevorzugten Ausführungsart der Erfindung.

### Wege zur Ausführung der Erfindung

Der in Fig. 1 dargestellte Brenner weist ein einseitig geschlossenes, kreiszylindrisches Aussenrohr 20 für die Zufuhr eines Oxidationsgases und ein koaxial zum Aussenrohr 20 in seinem Innenraum angeordnetes, einseitig geschlossenes, kreiszylindrisches Innenrohr 30 für die Zufuhr eines Brennstoffgases auf. Die beiden Zufuhrrohre 20, 30 sind im wesentlichen vertikal angeordnet. Das Aussenrohr 20 ist in der Nähe seines geschlossenen, unteren Rohrendes in gasleitender Funktion mit einer Speiseleitung 22 für das Oxidationsgas verbunden, und das Innenrohr 30 ist in der Nähe seines geschlossenen, unteren Rohrendes in gasleitender Funktion mit einer Speiseleitung 32 für das Brennstoffgas verbunden. Das Innenrohr 30 ist durch den Boden des Aussenrohres 20 hindurch geführt, wobei die Durchführungsstelle im Boden des Aussenrohres 20 hermetisch dicht abgeschlossen ist und die beiden Rohre 20, 30 dort fest miteinander verbunden sind.

Das offene, obere Rohrende des Aussenrohres 20 und das im wesentlichen auf gleicher Höhe angeordnete offene, obere Rohrende des Innenrohres 30 münden in einen Brennraum 10 des Brenners. Durch die koaxiale Anordnung der Zufuhrrohre 20, 30 für das Oxidationsgas und das Brennstoffgas wird die Erzeugung einer Parallel-Diffusionsflamme im Brennraum 10 ermöglicht.

Der Brennraum 10 wird durch ein rohrförmiges Gehäuse begrenzt, das einen zylindrischen unteren Abschnitt 40 und einen sich nach oben hin verjüngenden, kegelstumpfförmigen oberen Abschnitt 42 aufweist. Durch die sich nach oben hin verengende Form des Brennraumes 10 wird sichergestellt, dass keine Aufweitung der Strömung bzw. der Flamme im Brennraum 10 erfolgt. Die koaxialen Zufuhrrohre 20, 30 für das Oxidationsgas und das Brennstoffgas sind durch den Boden des zylindrischen Brennraumgehäuseabschnittes 40 hindurch geführt, wobei das Aussenrohr 20 mitsamt seinem koaxial angeordneten Innenrohr 30 in vertikaler Richtung bezüglich des Brennraumgehäuses 40, 42 verschiebbar ist. Durch ein vertikales Verschieben der koaxialen Zufuhrrohre 20, 30 für das Oxidationsgas und das Brennstoffgas kann die effektive Höhe des Brennraumes 10 verändert werden, wobei die effektive Höhe des Brennraumes 10 durch den vertikalen Abstand zwischen den auf gleicher Höhe liegenden Mündungen der Zufuhrrohre 20, 30 im Brennraum 10 und der zuoberst an der Kegelstumpfspitze des Brennraumgehäuses 42 angeordneten Austrittsmüdnung 45 des Brennraumes 10 definiert wird.

Die Austrittsmündung 45 des Brennraumes 10 mündet in ein im wesentlichen rechtwinklig zum Brennraumgehäuse 40, 42 bzw. zu den Zufuhrrohren 20, 30 für das Oxidationsgas und das Brennstoffgas angeordnetes, einseitig geschlossenes kreiszylindrisches Rohr 50, das als Russwegführleitung dient. Dieses Russwegführrohr 50 ist im Innenraum eines einseitig geschlossenen, kreiszylindrischen Mantelrohres 60 angeordnet. Der Zylindermantel des Mantelrohres 60 und der Zylindermantel des Russwegführrohres 50 werden von der kegelstumpfförmigen Partie 42 des Brennraumgehäuses durchdrungen, wobei die entsprechenden Durchdringungsstellen hermetisch dicht abgeschlossen sind und das Brennraumgehäuse an den Druchdringungsstellen fest mit dem Mantelrohr 60 bzw. dem Russwegführrohr 50 verbunden ist.

Das Russwegführrohr 50 und das Mantelrohr 60 sind koaxial zueinander angeordnet und auf der gleichen Rohrseite offen bzw. geschlossen. Das Russwegführrohr 50 ist durch das abgeschlossene Rohrende des Mantelrohres 60 hindurch geführt, wobei die Durchführungsstelle in der Abschlusswand des Mantelrohres 60 hermetisch dicht abgeschlossen und die beiden Rohre 50, 60 dort fest miteinander verbunden sind. Das Russwegführrohr 50 ist in der Nähe seines geschlossenen Rohrendes in gasleitender Funktion mit einer Speiseleitung 52 für ein Löschgas verbunden, und das Mantelrohr 60 ist in der Nähe seines geschlossenen Rohrendes in gasleitender Funktion mit einer Speiseleitung 62 für ein Verdünnungsgas verbunden.

Das Mantelrohr 60 ragt bei seinem offenen Rohrende über das offene Rohrende des in seinem Innenraum angeordneten Russwegführrohres 50 hinaus, um eine Verdünnungszone 64 für eine zusätzliche Verdünnung zu schaffen. In der Verdünnungszone 64 wird die aus dem Russwegführrohr 50 austretende Stoffströmung (welche die aus dem Brennraum 10 austretende Stoffströmung umfasst, die durch das Löschgas gelöscht und ein erstes mal verdünnt wurde) mit dem Verdünnungsgas vermischt und dadurch weiter verdünnt.

Insgesamt bildet der Brenner ein System, das bis auf die Speiseleitungsanschlüsse 32, 22, 52, 62 für das Brennstoffgas, das Oxidationsgas, das Löschgas und das Verdünngungsgas sowie das als Brenneraustrittsöffnung 65 dienende offene Rohrende des Mantelrohres 60 gegenüber der Umgebung hermetisch abgeschlossen ist.

Für den Betrieb des in Fig. 1 dargestellten Brenners werden Brennstoffgas über die Brennstoffgasspeiseleitung 32 und Oxidationsgas über die Oxidationsgasspeiseleitung 22 in den Brenner eingespiesen. In Fig. 1 ist die Strömung des Brennstoffgases durch die Pfeile 1 und die Strömung des Oxidationsgases durch die Pfeile 2 dargestellt. Als Brennstoffgas wird vorzugsweise ein kohlenwasserstoffhaltiges Gas (z.B. Propan) verwendet. Es können jedoch auch andere Brennstoffgase bzw. Gasmischungen verwendet werden, wie z.B. dampfförmiger Dieseltreibstoff oder Benzin. Als Oxidationsgas wird vorzugsweise synthetische Luft (80% Stickstoffgas, 20% Sauerstoffgas) verwendet. Die Verwendung von anderen Oxidationsgasen ist jedoch auch möglich.

Die Brennstoffgasspeiseleitung 32 ist weiter mit einem Mischventil (nicht dargestellt) versehen, welches es ermöglicht, dem Brennstoffgas ein Inertgas beizumischen, um den Brennstoffgehalt der Gasmischung zu verdünnen. Zum Verdünnen des Brennstoffgases kann z.B. gasförmiger Stickstoff verwendet werden. Auf diese Art kann die Grössenverteilung der im Brenner erzeugten Russpartikel eingestellt werden. Mit dem in Fig. 1 dargestellten Brenner können Russpartikel in einem Grössenbereich von einem Mikrometer bis einigen Nanometem hinunter erzeugt werden, wobei durch eine entsprechende Einstellung der Brennerparameter beliebige Grössenverteilungen innerhalb dieses Bereichs ausgewählt werden können. Die Oxidationsgasspeiseleitung 22 ist ebenfalls mit einem Mischventil (nicht dargestellt) versehen, welches es ermöglicht, dem Oxidationsgas Sauerstoffgas beizumischen. Somit sind bei dem in Fig. 1 dargestellten Brenner sowohl der Brennstoffgasgehalt als auch der Sauerstoffgehalt kontrolliert regulierbar.

Auch die Löschgasspeiseleitung 52 ist mit einem Mischventil (nicht dargestellt) versehen. Dieses Mischventil ermöglicht es, dem Löschgas vor der Löschgaseinmündung 55 in das Russwegführrohr 50 ein oder mehrere weitere Gase und/oder ein oder mehrere weitere Aerosole beizumischen. Der Brenner kann dadurch als Abgassimulator verwendet werden, mit welchem sich Abgasströmungen simulieren lassen, welche den Abgasströmungen aus realen Verbrennungsmotoren und/oder Feuerungen sehr ähnlich sind. Die zur Simulation von wirklichkeitsnahen Abgasströmungen dem Löschgas beizumischenden Gase und/oder Aerosole können beispielsweise Ozon, Schwefeldioxid, Sauerstoff, Wasserdampf, Staub, Latex-Aerosole, Kohlewasserstoffe, Benzoldampf und weitere in realen Abgasen vorkommenden Stoffe umfassen.

Vorzugsweise werden die Strömungsverhältnisse in den Speiseleitungen (Durchflussmenge, Gasdruck usw.) derart eingestellt, dass sich im Brennraum 10 im wesentlichen laminare Brennstoff- und Oxidationsgasströmungen ergeben. Nach der Zündung der Flamme wird dadurch im Brennraum 10 eine laminare Parallel-Diffusionsflamme (englisch "laminar co-flow diffusion flame") gebildet, welche im Brennraum 10 eine nahezu zylindrische Form aufweist. Grundsätzlich ist jedoch auch ein Betrieb des in Fig. 1 dargestellten Brenners mit derart eingestellten Strömungsverhältnissen möglich, dass im Brennraum eine turbulente Diffusionsflamme gebildet wird.

Das Brennstoffgas strömt in einem zentralen Bereich einer zylindrischen Gassströmung in den Brennraum 10 hinein, wobei die Brennstoffgasströmung aussen von einer Oxidationsgasströmung umgeben ist. In der Flamme wird das Brennstoffgas zunächst in einem mittleren Strömungsbereich pyrolisiert, d.h. der Kohlenstoff wird vom Wasserstoff getrennt. Der Wasserstoff diffundiert wesentlich rascher nach aussen zum Rand der Flamme hin als der Kohlenstoff. Deshalb wird am Rand der Flamme vor allem der Wasserstoff durch den Sauerstoff aus dem die Flamme umgebenden Oxidationsgas oxidiert, während im Innern der Flamme ein Sauerstoffdefizit und ein Überschuss an Kohlenstoff herrscht. Die pyrolisierten Kohlenstoffatome gehen, vom Zentrum der Flamme aus, Verbindungen mit anderen Kohlenstoffatomen ein und formieren sich dadurch zu Russpartikeln. Somit werden im Falle einer laminaren Diffusionsflamme Russpartikel vor allem im Bereich der Brennstoffgasströmung erzeugt. Dieser Bereich ist in Fig. 1 durch die inneren unterbrochenen Linien 6 angedeutet. Dieser einen Grossteil der erzeugten Russpartikel enthaltende Strömungsbereich ist von einer Strömung aus Verbrennungsgasen (z.B. Wasserdampf) umgeben, dessen Aussengrenze in Fig. 1 durch die äusseren unterbrochenen Linien 7 angedeutet ist. Der die Russpartikel umhüllende Mantel bewirkt, dass die Russpartikel erst nach dem nachfolgend beschrieben Löschen, Abkühlen und Verdünnen durch das Löschgas in Kontakt mit den Wänden des Brenners kommen. Dadurch werden Russablagerungen im Brenner wirksam verhindert.

Die in Bezug auf die Strömungsrichtung vorn offene Zylinderflamme erstreckt sich durch die Austrittsmündung 45 des Brennraumes 10 hindurch in die Russwegführleitung 50 hinein. Beim Betrieb des Brenners wird Löschgas über die Löschgasspeiseleitung 52 durch eine Löschgaseinmündung 55 hindurch in die Russwegführleitung 50 eingespiesen. Die Löschgasströmung ist in Fig. 1 mit den Pfeilen 3 angedeutet. Die Russwegführleitung 50 wird somit im Bereich der Mündung 45 aus dem Brennraum 10 von Löschgas 3 durchströmt. Dadurch wird die sich in die Russwegführleitung 50 hinein erstreckende Flamme in der Umgebung der Austrittsmündung 45 aus dem Brennraum 10 durch das Löschgas erstickt, abgekühlt und verdünnt.

Vorzugsweise werden die Strömungsverhältnisse in der Russwegführleitung 50 derart eingestellt, dass sich stromaufwärts der Mündung 45 aus dem Brennraum 10 eine im wesentlichen laminare Löschgasströmungen 3 ergibt, um zu vermeiden, dass Turbulenzen durch die Mündung 45 hindurch auf den Brennraum 10 zurück schlagen. Zu diesem Zweck kann die Russwegführleitung 50 stromaufwärts der Mündung 45 aus dem Brennraum 10 mit Gasführungslamellen versehen sein.

Als Löschgas wird vorzugsweise Stickstoffgas verwendet. Grundsätzlich können jedoch auch andere die Oxidation hemmende Gase verwendet werden, wie z.B. Edelgase, andere Inertgase oder Kohlendioxid.

Von der Austrittsmündung 45 aus dem Brennraum 10 an strömt die mit dem Löschgas vermischte Strömung aus dem Brennraum (in Fig. 1 durch die Pfeile 5 dargestellt) durch das offene Rohrende des Russwegführrohres 50 hindurch und wird anschliessend in der Verdünnungsszone 64 innerhalb des Mantelrohres 60 mit dem Verdünnungsgas vermischt, welches über die Verdünnungsgasspeiseleitung 62 in das Mantelrohr 60 eingespiesen wird. Die Strömung des Verdünnungsgases ist in Fig. 1 durch die Pfeile 4 angedeutet. Als Verdünnungsgas wird vorzugsweise synthetische Luft verwendet. Grundsätzlich können jedoch auch andere geeignete Verdünnungsgase für den Betrieb des in Figl. 1 dargestellten Brenners verwendet werden, oder es kann auf eine Verdünnung verzichtet werden.

Die in der Verdünnungszone 64 erfolgende zusätzliche Verdünnung der Stoffströmung, welche die im Brenner erzeugten Russpartikel enthält, dient der Änderung der Anzahlkonzentration der Russpartikel derart; dass sie innerhalb der Messgrenzen eines Russpartikel-Messgerätes (nicht dargestellt) zu liegen kommt, welchem die im Brenner erzeugten Russpartikel zugeführt werden.

Zusammenfassend ist festzustellen, dass durch die Erfindung ein Brenner zum stabilen und reproduzierbaren Erzeugen von Russ derart geschaffen wird, dass die erzeugten Russpartikel wohldefinierte chemische und physikalische Eigenschaften aufweisen.

## Patentansprüche

1. Brenner zum Erzeugen von Russ, mit einem Brennraum (10), zu welchem Brennstoffgas und Oxidationsgas derart zuführbar sind, dass im Brennraum (10) eine Russpartikel erzeugende Diffusionsflamme gebildet wird, und einer Russwegführleitung (50) mit einer Einmündung (45) aus dem Brennraum (10), durch welche hindurch im Brennraum (10) gebildeter Russ wegführbar ist, **gekennzeichnet durch** eine weitere Einmündung (55) in die Russwegführleitung (50), **durch** welche hindurch Löschgas zuführbar ist.

2. Brenner nach Anspruch 1, **dadurch gekennzeichnet, dass** die Löschgas-Einmündung (55) in Bezug auf die Strömungsrichtung in der Russwegführleitung (50) vor der Brennraum-Einmündung (45) an der Russwegführleitung (50) angeordnet ist und die Brennraum-Einmündung (45) derart an der Russwegführleitung (50) angeordnet ist, dass die Strömung aus dem Brennraum (10) im wesentlichen rechtwinklig in die Löschgas-Strömung (3) einmündet.

3. Brenner zum Erzeugen von Russ insbesondere nach Anspruch 1, mit einem Brennraum (10), zu welchem durch Zufuhrmündungen hindurch Brennstoffgas und Oxidationsgas derart zuführbar sind, dass im Brennraum (10) eine Russpartikel erzeugende Diffusionsflamme gebildet wird, und einer Russwegführleitung (50) mit wenigstens einer Einmündung (45) aus dem Brennraum (10), durch welche hindurch im Brennraum (10) gebildeter Russ wegführbar ist, **dadurch gekennzeichnet, dass** der Brennraum (10) bis auf die Zufuhrmündungen für das Brennstoffgas und das Oxidationsgas sowie den in die Russwegführleitung (50) mündenden Mündungen derart hermetisch abgeschlossen ist, dass sämtliche aus dem Brennraum (10) ausströmenden Stoffe durch die Russwegführleitung (50) hindurch weggeführt werden.

4. Brenner nach Anspruch 3, **dadurch gekennzeichnet, dass** die Distanz zwischen den Zufuhrmündungen für das Brennstoffgas und das Oxidationsgas einerseits sowie den in die Russwegführleitung (50) mündenden Mündungen (45) andererseits wahlweise einstellbar ist.

5. Brenner nach einem der Ansprüche 1 bis 4, **gekennzeichnet durch** ein Aussenrohr (20) für die Zufuhr des Oxidationsgases zum Brennraum (10), wobei koaxial zum Aussenrohr (20) in dessen Innenraum ein Innenrohr (30) für die Zufuhr des Brennstoffgases zum Brennraum (10) derart angeordnet ist, dass im Brennraum (10) eine Parallel-Diffusionsflamme gebildet werden kann.

6. Brenner nach einem der Ansprüche 1 bis 5, **dadurch gekennzeichnet, dass** er weiter mit Mitteln (60, 62) zum Verdünnen der Anzahlkonzentration der Russpartikel in der die Russpartikel enthaltenden Strömung stromabwärts des Brennraumes (10) versehen ist.

7. Brenner nach einem der Ansprüche 1 bis 6, **dadurch gekennzeichnet dass** eine Mischvorrichtung, welche stromaufwärts des Brennraumes (10) liegt, eine Vermischung eines Brennstoffgases mit einem Inertgas ermöglicht, wobei das Mischungsverhältnis wahlweise einstellbar ist.

8. Verfahren zum Erzeugen von Russ, wobei Brennstoffgas und Oxidationsgas derart in einen Brennraum (10) eines Brenners zugeführt werden, dass im Brennraum (10) eine Russpartikel erzeugende Diffusionsflamme gebildet wird, **dadurch gekennzeichnet, dass** die aus dem Brennraum (10) austretende russpartikelhaltige Strömung mit einer Strömung aus Löschgas vermischt wird, um Verbrennungsprozesse in der russpartikelhaltigen Strömung zu ersticken.

9. Verfahren nach Anspruch 8, **dadurch gekennzeichnet, dass** das Brennstoffgas und das Oxidationsgas derart in den Brennraum (10) zugeführt werden, dass im Brennraum (10) eine laminare Diffusionsflamme gebildet wird.

10. Verfahren nach Anspruch 8 oder 9, **dadurch gekennzeichnet, dass** als Löschgas ein Inertgas verwendet wird, das aus einer die Edelgase, Stickstoff und Kohlendioxid umfassenden Gruppe ausgewählt ist.

11. Verfahren nach einem der Ansprüche 8 bis 10, **dadurch gekennzeichnet, dass** dem Löschgas vor der Vermischung mit der russpartikelhaltigen Strömung wenigstens ein zusätzliches Gas oder Aerosol beigemischt wird, um eine russpartikelhaltige Strömung zu erzeugen, welche russpartikelhaltigen Strömungen aus Verbrennungsmotoren und/oder Feuerungen möglichst ähnlich ist.

12. Verfahren zum Eichen eines Russpartikel-Messgerätes, **dadurch gekennzeichnet, dass** zum Eichen des Russpartikel-Messgerätes diesem Russpartikel zugeführt werden, welche mittels eines Brenners nach einem der Ansprüche 1 bis 7 oder mittels eines Verfahrens nach einem der Ansprüche 8 bis 11 erzeugt sind.

## Claims

1. Burner for generating soot, comprising a combustion chamber (10) capable of being supplied with fuel gas and oxidizing gas in such a manner that a diffusion flame generating soot particles is formed in the combustion chamber (10), as well as a soot discharge line (50) having an inlet (45) from the combustion chamber (10) and allowing to extract the soot formed in the combustion chamber (10), **characterized by** a further inlet (55) into the soot discharge line (50) for the supply of a quenching gas.

2. Burner according to claim 1, **characterized in that** the quenching gas inlet (55), seen in the direction of the flow in the soot discharge line (50), is arranged on the soot discharge line (50) in front of the inlet (45) from the combustion chamber, and **in that** the inlet (45) from the combustion chamber is arranged on the soot discharge line (50) in such a manner that the flow from the combustion chamber (10) meets the quenching gas flow (3) essentially orthogonally.

3. Burner for generating soot, particularly according to claim 1, comprising a combustion chamber (10) capable of being supplied through supply inlets with fuel gas and oxidizing gas in such a manner that a diffusion flame generating soot particles is formed in the combustion chamber, as well as a soot discharge line (50) having at least one inlet (45) from the combustion chamber (10) and allowing to extract the soot formed in the combustion chamber (10), **characterized in that** except for the supply inlets of the fuel gas and the oxidizing gas and the openings towards the soot discharge line (50), the combustion chamber (10) is hermetically closed such that all matter flowing out of the combustion chamber (10) is discharged by the soot discharge line (50).

4. Burner according to claim 3, **characterized in that** the distance between the supply inlets of the fuel gas and the oxidizing gas, on the one hand, and the openings (45) leading to the soot discharge line (50), on the other hand, is selectively adjustable.

5. Burner according to one of claims 1 to 4, **characterized by** an outer tube (20) for the supply of the oxidizing gas to the combustion chamber (10), an inner tube (30) being arranged coaxially to the outer tube (20) inside the latter for the supply of the fuel gas to the combustion chamber (10), thereby allowing a parallel diffusion flame to be formed in the combustion chamber (10).

6. Burner according to one of claims 1 to 5, **characterized in that** it is further provided with means (60, 62) for diluting the number density of soot particles in the flow containing the soot particles downstream of the combustion chamber (10).

7. Burner according to one of claims 1 to 6, **characterized in that** a mixing device situated upstream of the combustion chamber (10) allows the mixing of a fuel gas with an inert gas, the mixing ratio being selectively adjustable.

8. Method for generating soot, in which a fuel gas and an oxidizing gas are supplied to a combustion chamber (10) of a burner in such a manner that a soot generating diffusion flame is formed in the combustion chamber (10), **characterized in that** the flow containing soot particles emitted from the combustion chamber (10) is mixed with a flow of quenching gas in order to suffocate combustion processes in the flow containing soot particles.

9. Method according to claim 8, **characterized in that** the fuel gas and the oxidizing gas are supplied to the combustion chamber (10) in such a manner as to form a laminar diffusion flame in the combustion chamber (10).

10. Method according to claim 8 or 9, **characterized in that** an inert gas is used as a quenching gas, the inert gas being selected from a group including the noble gases, nitrogen and carbon dioxide.

11. Method according to one of claims 8 to 10, **characterized in that** at least one additional gas or aerosol is admixed to the quenching gas prior to admixing the latter to the flow containing soot particles in order to produce a flow containing soot particles which is as similar as possible to flows containing soot particles from internal combustion engines and/or heating installations.

12. Method for gauging a soot particle measuring apparatus, **characterized in that** for gauging the soot particle measuring apparatus, the latter is supplied with soot particles generated by means of a burner according to one of claims 1 to 7 or by a method according to one of claims 8 to 11.

## Revendications

1. Brûleur pour la génération de suie, comprenant une chambre de combustion (10) pouvant être alimentée en gaz combustible et en gaz oxydant de telle manière qu'une flamme de diffusion produisant des particules de suie est formée dans la chambre de combustion (10), et une conduite d'extraction (50) de la suie munie d'une embouchure (45) en provenance de la chambre de combustion (10) et permettant l'extraction de la suie formée dans la chambre de combustion (10), **caractérisé par** une embouchure (55) supplémentaire dans la conduite d'extraction (50) de la suie, ladite embouchure permettant l'amenée d'un gaz d'extinction.

2. Brûleur selon la revendication 1, **caractérisé en ce que** par rapport à la direction d'écoulement dans la conduite d'extraction (50) de la suie, l'embouchure (55) du gaz d'extinction débouche dans la conduite d'extraction (50) de la suie avant l'embouchure (45) de la chambre de combustion, et l'embouchure (45) de la chambre de combustion est disposée sur la conduite d'extraction (50) de la suie de telle manière que le flux en provenance de la chambre de combustion (10) débouche dans le flux (3) du gaz d'extinction essentiellement orthogonalement.

3. Brûleur pour la génération de suie, particulièrement selon la revendication 1, comprenant une chambre de combustion (10) pouvant être alimentée, par des embouchures d'amenée, en gaz combustible et en gaz oxydant de telle manière qu'une flamme de diffusion produisant des particules de suie est formée dans la chambre de combustion (10), et une conduite d'extraction (50) de la suie munie d'une embouchure (45) au moins en provenance de la chambre de combustion (10) et permettant l'extraction de la suie formée dans la chambre de combustion (10), **caractérisé en ce que** la chambre de combustion (10) est hermétiquement fermée à l'exception des embouchures d'amenée du gaz combustible et du gaz oxydant et des embouchures débouchant dans la conduite d'extraction (50) de la suie de telle manière que toutes les substances émises de la chambre de combustion (10) sont extraites par la conduite d'extraction (50) de la suie.

4. Brûleur selon la revendication 3, **caractérisé en ce que** la distance entre les embouchures d'amenée du gaz combustible et du gaz oxydant, d'une part, et les embouchures (45) débouchant dans la conduite d'extraction (50) de la suie, d'autre part, est séléctivement réglable.

5. Brûleur selon l'une des revendications 1 à 4, **caractérisé par** un tube extérieur (20) pour l'amenée du gaz oxydant à la chambre de combustion (10), un tube intérieur (30) pour l'amenée du gaz combustible à la chambre de combustion (10) étant coaxialement agencé à l'intérieur dudit tube extérieur de manière à permettre la formation d'une flamme de diffusion parallèle dans la chambre de combustion (10).

6. Brûleur selon l'une des revendications 1 à 5, **caractérisé en ce qu'**il est muni en outre de moyens (60, 62) permettant de diluer le nombre volumique des particules de suie dans le flux contenant les particules de suie en aval de la chambre de combustion (10).

7. Brûleur selon l'une des revendications 1 à 6, **caractérisé en ce qu'**un dispositif de mélange agencé en amont de la chambre de combustion (10) permet l'adjonction d'un gaz inerte à un gaz combustible, le rapport de mélange étant séléctivement réglable.

8. Procédé de génération de suie où un gaz combustible et un gaz oxydant sont amenés dans la chambre de combustion (10) d'un brûleur de telle manière qu'une flamme de diffusion produisant des particules de suie est formée dans la chambre de combustion, **caractérisé en ce que** le flux contenant les particules de suie émises de la chambre de combustion (10) est mélangé avec un flux d'un gaz d'extinction afin de suffoquer des processus de combustion dans le flux contenant les particules de suie.

9. Procédé selon la revendication 8, **caractérisé en ce que** le gaz combustible et le gaz oxydant sont amenés dans la chambre de combustion (10) de telle manière qu'une flamme de diffusion laminaire est formée dans la chambre de combustion (10).

10. Procédé selon la revendication 8 ou 9, **caractérisé en ce que** le gaz d'extinction est un gaz inerte choisi parmi le groupe comprenant les gaz nobles, l'azote et le dioxyde de carbone.

11. Procédé selon l'une des revendications 8 à 10, **caractérisé en ce que** le gaz d'extinction est mélangé avant son adjonction au flux contenant les particules de suie avec au moins un gaz ou aérosol additionnel afin de produire un flux contenant des particules de suie aussi similaire que possible à des flux contenant des particules de suie émis par des moteurs à combustion interne et/ou des chauffages.

12. Procédé d'étalonnage d'un appareil de mesure de particules de suie, **caractérisé en ce qu'**aux fins de l'étalonnage, des particules de suie générées avec un brûleur selon l'une des revendications 1 à 7 ou avec un procédé selon l'une des revendications 8 à 11 sont alimentées audit appareil de mesure des particules de suie.
